# NEUE EUROPÄISCHE PATENTSCHRIFT

(11) **EP 1 649 250 B2**
(45) Veröffentlichungstag und Bekanntmachung des Hinweises auf die Entscheidung über den Einspruch: **17.07.2013**
(45) Hinweis auf die Patenterteilung: 12.09.2007
(21) Anmeldenummer: 04763567.7
(22) Anmeldetag: 28.07.2004
(51) Int. Cl.: G01D 5/20

(54) **VORRICHTUNG UND VERFAHREN ZUR ERFASSUNG DES WEGS EINES ZIELOBJEKTS**
DEVICE AND METHOD FOR RECORDING THE PATH OF A TARGET OBJECT
DISPOSITIF ET PROCEDE POUR MESURER LA TRAJECTOIRE D'UN OBJET CIBLE

(30) Priorität: 31.07.2003 DE 10335133
(43) Veröffentlichungstag der Anmeldung: 26.04.2006
(73) Patentinhaber: Pepperl + Fuchs GmbH, 68307 Mannheim (DE)
(72) Erfinder: FREUND, Thomas, 68199 Mannheim (DE); HÖBEL, Heiko, 67547 Worms (DE)
(74) Vertreter: Schiffer, Axel Martin
(86) Internationale Anmeldenummer: PCT/EP2004/008454
(87) Internationale Veröffentlichungsnummer: WO 2005/012840

(56) Entgegenhaltungen:
- DE-A- 2 549 627
- DE-A- 3 100 486
- DE-A- 10 125 278
- DE-A- 10 129 819
- DE-A- 10 232 710
- US-A- 3 846 771
- US-A- 4 652 821

## Beschreibung

Die vorliegende Erfindung betrifft eine Vorrichtung zur Erfassung der Position eines, insbesondere metallischen, Zielobjekts nach dem Oberbegriff des Anspruchs 1. In einem weiteren Aspekt betrifft die Erfindung ein Verfahren zur Erfassung der Position eines, insbesondere metallischen, Zielobjekts nach dem Oberbegriff des Anspruchs 19.

Eine gattungsgemäße Vorrichtung weist mindestens zwei Nachweiseinrichtungen auf, die entlang einer zu überwachenden Wegstrecke so positioniert sind, dass sich die Empfindlichkeitskurven von einander unmittelbar benachbarten Nachweiseinrichtungen wenigstens teilweise überlappen, wobei die Nachweiseinrichtungen jeweils mindestens eine Induktivität und mindestens einen Oszillator aufweisen und, abhängig von einer Entfernung des Zielobjekts von der jeweiligen Nachweiseinrichtung, ein Entfernungssignal liefern. Eine gattungsgemäße Vorrichtung weist weiterhin auf: Mindestens eine Umsetzeinrichtung, die mit den Nachweiseinrichtungen in Wirkverbindung steht, zum Umsetzen der von den Nachweiseinrichtungen jeweils erfassten Entfernungssignale in Analogsignale, sowie mindestens eine Auswerteeinrichtung, die mit der Umsetzeinrichtung oder den Umsetzeinrichtungen in Wirkverbindung steht, zum Ermitteln und Ausgeben einer Ortsposition des Zielobjekts aus den auf die jeweiligen Nachweiseinrichtungen zurückgehenden Analogsignalen.

Bei dem gattungsgemäßen Verfahren werden mindestens zwei Nachweiseinrichtungen entlang einer zu überwachenden Wegstrecke so positioniert, dass sich die Empfindlichkeitskurven von einander unmittelbar benachbarten Nachweiseinrichtungen wenigstens teilweise überlappen, wobei die Nachweiseinrichtungen jeweils in Abhängigkeit von der Entfernung des Zielobjekts ein Entfernungssignal liefern. Weiterhin werden die von den Nachweiseinrichtungen jeweils erfassten Entfernungssignale von mindestens einer Umsetzeinrichtung in Analogsignale, insbesondere Strom- und/oder Spannungssignale umgesetzt, und aus den verschiedenen, auf die jeweiligen Nachweiseinrichtungen zurückgehenden Analogsignalen wird die Position des Zielobjekts ermittelt.

Derartige Vorrichtungen werden bei einer Vielzahl von industriellen Prozessen im Bereich der Automatisierung eingesetzt. Zahlreiche Anwendungsmöglichkeiten bestehen auch im Bereich der Automobiltechnik. Beispielsweise ist in DE 102 04 453 A1 ein analoger induktiver Wegaufnehmer beschrieben, mit dem eine relative Verschiebung zwischen einem Fahrzeugsitz und einer Kraftfahrzeugkarosserie bestimmt werden kann. Als Messprinzip dient hierbei die bei einer Relativverschiebung eines Testkörpers aus einem Material hoher magnetischer Permeabilität bewirkte Änderung der magnetischen Induktion. Notwendig für die magnetische Kopplung ist daher ein ferromagnetisches Material, so dass die Einsatzmöglichkeiten des dort beschriebenen induktiven Wegaufnehmers bezüglich des Materials des zu verfolgenden Zielobjekts oder Targets eingeschränkt sind. Insbesondere sind ferromagnetische Targets häufig mechanisch sehr empfindlich.

Im Hinblick auf eine konkrete Bestimmung der Ortskoordinaten eines Zielobjekts besteht ein weiteres Problem darin, dass die Nachweiskurven der verwendeten Nachweiseinrichtungen oder Sensoren meist keine eindeutige Zuordnung eines Messwerts zu einer definierten Position des Objekts relativ zum Sensor gestatten. Vielmehr liefern solche Sensoren, beispielsweise induktive Näherungsschalter, für eine Mehrzahl von Positionen denselben Messwert, beispielsweise für zwei einander bezüglich einer Symmetrieachse gegenüberliegende Punkte auf einer Geraden.

Um dem letztgenannten Problem abzuhelfen, wurden gekippte Längsspulen eingesetzt. Da das Nachweissignal dann aber sehr stark vom Abstand abhängig ist, können nur sehr begrenzte Wegstrecken überwacht werden.

In EP 1 306 649 A1 ist eine induktive Sensoranordnung zur Erfassung einer Dreh- oder Translationsposition beschrieben, bei der eine Mehrzahl von Primär- oder Sekundärspulen entlang einer zu überwachenden Wegstrecke angeordnet ist. Zum Positionsnachweis wird eine elektromagnetische Beeinflussung der Spulen durch das Zielobjekt herangezogen.

DE 101 30 572 A1 betrifft einen induktiven Wegsensor zur Bestimmung der Position eines Beeinflussungselements. Um einen induktiven Wegsensor mit einer möglichst geringen Baulänge und dabei großer Messgenauigkeit bereitzustellen, wird dort vorgeschlagen, ein und dieselbe Kapazität mit Hilfe eines Umschalters mit einer Mehrzahl von Induktivitäten, die entlang der Wegstrecke angeordnet sind, zu einem Schwingkreis zu verschalten. Als Messeffekt wird dabei der Transformatoreffekt, d.h. die Spannungsinduktion in dem Beeinflussungselement aufgrund der elektromagnetischen Schwingung in dem jeweils aktivierten Schwingkreis, herangezogen.

Gegenstand von DE 42 13 866 A1 ist ein Positionssensor zum Erfassen von linearen oder drehenden Bewegungen mit hoher Auflösung. Zur Lösung der Aufgabe, einen robusten Sensor bereitzustellen, der unter anderem eine hohe Auflösung ermöglicht, wird vorgeschlagen, bei einem Sensor eine Einrichtung zur Durchführung einer Musteranalyse vorzusehen, welche die Kennwerte der Induktivitäten analysiert.

DE 197 38 839 A1 bezieht sich auf einen induktiven Winkelsensor. Um in möglichst einfacher Weise aus den sinusförmigen Ausgangssignalen der Empfangsspulen ein linear mit der Position des Rotorelements zusammenhängendes Sensorausgangssignal zu erzeugen, wird in dieser Schrift ein Winkelsensor vorgeschlagen, bei dem eine Auswahleinrichtung in Abhängigkeit von momentanen Ausgabesignalen einer Mehrzahl von Empfangsspulen mindestens eines der Ausgangssignale auswählt und daraus die momentane Position des Rotorelements bestimmt. DE 31 00 486 offenbart eine Vorrichtung zur Erfassung der Position eines metallischen Objekts mit mehreren Sensoren die entlang einer zu überwachenden Wegstrecke positioniert sind und deren Empfindlichkeitskurven sich zumindest teilweise überlappen>

**Aufgabe** der Erfindung ist es, eine Vorrichtung und ein Verfahren zur Erfassung des Wegs eines Zielobjekts anzugeben, bei denen im Vergleich zu den im Stand der Technik bekannten Lösungen erheblich mehr Einsatzmöglichkeiten bestehen.

Diese Aufgabe wird durch die Vorrichtung mit den Merkmalen des Anspruchs 1 und durch das Verfahren mit den Merkmalen des Anspruchs 16 gelöst.

Vorteilhafte Ausgestaltungen der erfindungsgemäßen Vorrichtung sowie Weiterbildungen des erfindungsgemäßen Verfahrens sind Gegenstand der Unteransprüche.

Die gattungsgemäße Vorrichtung ist erfindungsgemäß dadurch weitergebildet, dass von den Nachweiseinrichtungen als Entfernungssignal jeweils ein Bedämpfungssignal des Oszillators ausgebbar ist.

Als erster Kerngedanke der Erfindung kann angesehen werden, als Nachweisprinzip nicht mehr, wie im Stand der Technik, die von einem Objekt hoher Permeabilität, d.h. einem ferromagnetischen Objekt, bewirkte Induktion heranzuziehen, sondern die Bedämpfung eines Oszillators durch das Zielobjekt zu verwenden. Da eine solche Bedämpfung grundsätzlich für beliebige metallische Objekte und nicht nur für ferromagnetische Objekte nachweisbar ist, können prinzipiell beliebige metallische Targets, insbesondere auch robuste metallische Zielobjekte, beispielsweise aus Edelstahl, verfolgt werden. Hierdurch wird der Anwendungsbereich gegenüber dem Stand der Technik erheblich verbreitert.

Als weiterer Kerngedanke der vorliegenden Erfindung kann angesehen werden, eine Mehrzahl, d.h. mindestens zwei Nachweiseinrichtungen, entlang einer zu überwachenden Wegstrecke zu positionieren. Auf diese Weise können nicht nur prinzipiell beliebig lange und beliebig geformte Wegstrecken überwacht werden, es können darüber hinaus auch eventuelle Mehrdeutigkeiten der Nachweissignale durch geeignete Auswertung eliminiert werden. Hierzu werden die Nachweiseinrichtungen erfindungsgemäß so angeordnet, dass sich die Empfindlichkeitskurven von einander unmittelbar benachbarten Nachweiseinrichtungen wenigstens teilweise überlappen.

Die erfindungsgemäße Vorrichtung ermöglicht also eine lineare Wegerfassung eines metallischen Objekts. Die Anordnung der Wegstrecke kann dabei beliebig lang sein und beliebige Formen annehmen, z.B. geradlinig, kreisförmig oder zickzackförmig. Prinzipiell sind auch Wegverläufe im Zwei- und Dreidimensionalen erfassbar.

Eine typische Anforderung bei industriellen Prozessen, die mit der vorliegenden Erfindung hervorragend erfüllt werden kann, besteht darin, dass ein Objekt oder ein Target über eine beispielsweise 100 mm lange Wegstrecke mit einer Genauigkeit von mindestens 1 mm erfasst werden soll. Bei einem Spezialfall hiervon befindet sich das Objekt immer im gleichen axialen Abstand von den Nachweiseinrichtungen oder den Sensoren.

Wenn Wege im Zweidimensionalen erfasst werden sollen, man spricht in diesem Zusammenhang auch von einer Wegerfassung in zwei Richtungen oder einer flächigen Wegerfassung, kann es zweckmäßig sein, geeignet geformte, beispielsweise besonders kleine, Induktivitäten einzusetzen. Dies ist insbesondere zweckmäßig, wenn die zu erfassenden Wege besonders kleine Krümmungsradien aufweisen.

Bei einer besonders vorteilhaften Variante der erfindungsgemäßen Vorrichtung sind die Nachweiseinrichtungen jeweils durch eine der Empfindlichkeitskurve entsprechenden Bedämpfungskurve charakterisiert, wobei diese Bedämpfungskurve jeweils Teilbereiche mit hoher Ortsauflösung aufweist. Die Bedämpfungskurve entspricht der in Abhängigkeit der Position des Zielobjekts gegenüber der Nachweiseinrichtung aufgetragenen Schwingungsamplitude des Oszillators, der bevorzugt in Eigenresonanz gehalten wird.

Bei dieser besonders bevorzugten Variante sind die Nachweiseinrichtungen dann so angeordnet, dass aus den Teilbereichen hoher Ortsauflösung der einzelnen Nachweiseinrichtungen eine Nachweiskurve für die gesamte zu überwachende Wegstrecke zusammengesetzt werden kann.
Die Empfindlichkeitskurven werden zweckmäßiger Weise normiert.

Auf diese Weise kann entlang der zu überwachenden Wegstrecke überall eine gewünschte hohe Ortsauflösung erreicht werden.

Bei bevorzugten Weiterbildungen sind dabei die Abstände der Nachweiseinrichtungen so gewählt, dass in den Teilbereichen hoher Ortsauflösung die Ortsauflösung überall größer als 10%, bevorzugt überall größer als 20% und besonders bevorzugt größer als 40% der maximalen Ortsauflösung ist. Selbstverständlich können mit höheren Sensordichten auch Konfigurationen erzielt werden, bei denen beispielsweise die Ortsauflösung an keiner Stelle unter 90% des Maximalwerts absinkt.

Um eine gleichmäßige Ortsauflösung zu erreichen, ist es außerdem zweckmäßig, die Nachweiseinrichtungen entlang der Wegstrecke äquidistant anzuordnen. Beispielsweise können die Nachweiseinrichtungen in einer Reihe angeordnet sein.

In einer Situation, in der eine laterale Ausdehnung der Sensoren größer ist als ein im Hinblick auf die Auflösung optimaler Abstand, können die Nachweiseinrichtungen in beispielsweise parallelen Reihen versetzt zueinander angeordnet sein.

Bei einer weiteren nutzbringenden Ausgestaltung der erfindungsgemäßen Vorrichtung, die beispielsweise bei einem Kraftspanner Einsatz finden kann, ist eine Führungseinrichtung zum Führen des Zielobjekts entlang der zu überwachenden Wegstrecke vorgesehen.

Hierbei kann es sich zum Beispiel um eine Führungsschiene handeln, in der ein metallisches Target beweglich angeordnet ist.

Ein wesentlicher Vorteil der vorliegenden Erfindung ist nun, dass im Hinblick auf das metallische Target keine hohe Anforderung gestellt ist, beispielsweise kann es sich um ein einfaches Metallplättchen handeln.

Im Bereich großer Überdeckung des Sensors durch das Zielobjekt liegt in den meisten Fällen ein vergleichsweise großer Bereich mit geringer Steigung der Empfindlichkeitskurve, d.h. der Bedämpfungskurve, vor. In diesem Bereich kann entsprechend nur eine geringe Ortsauflösung erzielt werden. Im Extremfall der maximalen Überdeckung ist die Ortsauflösung sogar null. Um diesen Bereich mit geringer Auflösung zu verkleinern, kann es zweckmäßig sein, wenn die Nachweiseinrichtungen entlang der zu überwachenden Wegstrecke so angeordnet sind, dass sie jeweils nur teilweise von dem Zielobjekt überdeckbar sind.

Alternativ oder zusätzlich kann auch das Zielobjekt in seinen Dimensionen so ausgebildet oder gewählt sein, dass eine einzelne Nachweiseinrichtung, beispielsweise also ein Sensor, von dem Zielobjekt nicht vollständig abdeckbar ist.

Zweckmäßig kann beispielsweise sein, wenn die Nachweiseinrichtungen entlang der zu überwachenden Wegstrecke so angeordnet sind oder das Zielobjekt so ausgebildet ist, dass die Nachweiseinrichtungen nur zu 90%, bevorzugt nur zu 85% und besonders bevorzugt nur zu 80%, von dem Zielobjekt überdeckbar sind.

Bei einer besonders bevorzugten Ausgestaltung ist mindestens eine Multiplexeinrichtung zwischen einer Umsetzeinrichtung und einer Mehrzahl von Nachweiseinrichtungen vorgesehen. Auf diese Weise können der schaltungsmäßige Aufwand und damit die Kosten deutlich reduziert werden.

Wenn aber eine besonders hohe Betriebssicherheit erforderlich ist oder wenn eine Nachweiseinrichtung zusammen mit einer Umsetzeinrichtung als separate Einheit austauschbar sein soll, kann es zweckmäßig sein, wenn jeder Nachweiseinrichtung eine Umsetzeinrichtung zugeordnet ist. Prinzipiell können die Induktivitäten beliebig orientiert zu der zu überwachenden Wegstrecke angeordnet sein. Insbesondere können auch verkippte Längsspulen eingesetzt werden. Um mit einer einzelnen Nachweiseinrichtung eine möglichst große Wegstrecke überwachen zu können, d.h. ummit einer möglichst geringen Zahl von Nachweiseinrichtungen bezogen auf die Wegstrecke auskommen zu können, ist es aber zweckmäßig, die Induktivitäten, insbesondere die Spulen, der Nachweiseinrichtungen mit ihren Achsen quer, insbesondere senkrecht, zu der zu überwachenden Wegstrecke anzuordnen.

Ein guter Kompromiss zwischen Zuverlässigkeit des Nachweises und einer gewünschten Minimierung der Zahl der eingesetzten Nachweiseinrichtungen wird erreicht, wenn die Nachweiseinrichtungen so angeordnet sind, dass die flächenmäßige Überlappung der Empfindlichkeitskurven von einander unmittelbar benachbarten Nachweiseinrichtungen zwischen 20 % und 50 %, insbesondere zwischen 25 % und 35 %, beträgt.

Bei einer besonders einfachen Ausgestaltung der erfindungsgemäßen Vorrichtung ist bei zumindest einem Teil der Nachweiseinrichtungen die Induktivität als Teil des Oszillators vorgesehen. Die Zahl der benötigten Komponenten kann dann auf ein Minimum reduziert werden.

Für zahlreiche Anwendungen, beispielsweise wenn ein im Wesentlichen linearer Weg erfasst werden soll, kann es ausreichend sein, wenn von den Nachweiseinrichtungen jeweils ein radialer Abstand des Zielobjekts von einer Achse der Induktivität erfassbar ist.

Ein Verfahren der oben angegebenen Art ist erfindungsgemäß dadurch weitergebildet, dass als Entfernungssignal jeweils Bedämpfungssignale von Oszillatoren der Nachweiseinrichtungen verwendet werden.

Die hiermit zusammenhängenden Wirkungen und Vorteile wurden vorstehend im Zusammenhang mit der erfindungsgemäßen Vorrichtung erläutert.

Bei einer besonders bevorzugten Variante des Verfahrens werden die Nachweiseinrichtungen so angeordnet, dass aus Teilbereichen mit hoher Ortsauflösung der Bedämpfungskurven der einzelnen Nachweiseinrichtungen eine Nachweiskurve für die gesamte zu überwachende Wegstrecke zusammensetzbar ist und dass zur Bestimmung der Position des Zielobjekts die gemessenen Bedämpfungswerte mit zuvor, insbesondere punktweise, aufgenommenen Einlerndaten verglichen werden.

Auf diese Weise kann eine sehr präzise und besonders gut reproduzierbare Positionsbestimmung erzielt werden.

Zweckmäßig wird dabei zur Aufnahme der Einlerndaten das Zielobjekt entlang der zu überwachenden Westrecke geführt, wobei die Position des Zielobjekts und die jeweiligen Bedämpfungssignale der Nachweiseinrichtungen mitgeschrieben werden. Dieser Vorgang kann mehrmals wiederholt werden, wobei anschließend die gewonnenen Messdaten zur Bereitstellung einer Eichkurve gemittelt werden.

Prinzipiell ermöglicht dieses Verfahren auch eine dreidimensionale Ortsbestimmung, wobei dann bei der Aufnahme der Einlerndaten der Ort des Zielobjekts auch quer zu der zu überwachenden Wegstrecke variiert wird und wobei auch hierbei jeweils die Positionen und jeweiligen Bedämpfungssignale mitgeschrieben werden.

Um eine besonders hohe Ortsauflösung zu erzielen, ist es zweckmäßig, die Bedämpfungskurve derjenigen Nachweiseinrichtung heranzuziehen, bei der an der aktuellen Position des Zielobjekts die zweitgrößte Bedämpfung gemessen wird. Man befindet sich dann weder im Bereich des Dämpfungsminimums, noch in den flachen Bereichen der Bedämpfungskurven weit entfernt vom Minimum. Vielmehr wird die zweitgrößte Bedämpfung gemessen, wenn sich das Zielobjekt im Bereich des linken oder rechten Schenkels des Minimums befindet.

Gemäß einer Kernidee der vorliegenden Erfindung kann eine Abstands- und/oder Positionsunabhängigkeit der Auswertung erzielt werden, wenn zur Auswertung ein Wertepaar bestehend aus dem Bedämpfungssignal, bei dem die zweitgrößte Bedämpfung gemessen wird und dem Bedämpfungssignal, bei dem die größte Bedämpfung gemessen wird, zur Auswertung herangezogen wird.

Bei einfachen Varianten der Datenauswertung wird zur Bestimmung der Position des Zielobjekts zwischen Punkten der Einlerndaten interpoliert.

Weiterhin können, um die Auswertung zu vereinfachen, Teilstücke der Bedämpfungskurven der Nachweiseinrichtungen für die Auswertung jeweils durch Geraden angenähert werden.

Bei der Verarbeitung der Analogsignale, die durch geeignete Hardware, beispielsweise Microcontroller, erfolgen kann, kann entweder nur ein Abschnitt einer Spule berücksichtigt werden oder es werden mehrere Spulen gleichzeitig ausgewertet und anschließend wird aus den verschiedenen Werten ein Verhältnis gebildet, um den genauen Wegpunkt, insbesondere eindeutig, zu ermitteln.

Die Verhältnisauswertung bietet sich bei breiteren Targets bzw. einer höheren Dichte von Nachweiseinrichtungen bzw. Spulensystemen an.

Weitere Eigenschaften und Vorteile der Erfindung werden nachstehend unter Bezugnahme auf die beigefügten schematischen Figuren beschrieben.

Dort zeigen:
- Fig. 1: eine schematische Darstellung eines ersten Ausführungsbeispiels der erfindungsgemäßen Vorrichtung;
- Fig. 2: eine schematische Darstellung des Verlaufs der Empfindlichkeitskurven einer Mehrzahl von Nachweiseinrichtung einer erfindungsgemäßen Vorrichtung;
- Fig. 3: eine schematische Darstellung eines zweiten Ausführungsbeispiels der erfindungsgemäßen Vorrichtung;
- Fig. 4: eine weitere schematische Ansicht des Verlaufs der Bedämpfungskurven von drei Sensoren einer erfindungsgemäßen Vorrichtung sowie eine Möglichkeit der Auswertung;
- Fig. 5: eine weitere Darstellung der Bedämpfungskurven von drei Sensoren einer erfindungsgemäßen Vorrichtung mit verändertem Abstand zum Zielobjekt;
- Fig. 6: eine vergrößerte Darstellung der Bedämpfungskurven von drei Sensoren einer erfindungsgemäßen Vorrichtung;
- Fig. 7: eine schematische Darstellung von Einlerndaten;
- Fig. 8: eine schematische Schnittansicht einer erfindungsgemäßen Vorrichtung; und
- Fig. 9: eine schematische Teilansicht einer erfindungsgemäßen Vorrichtung.

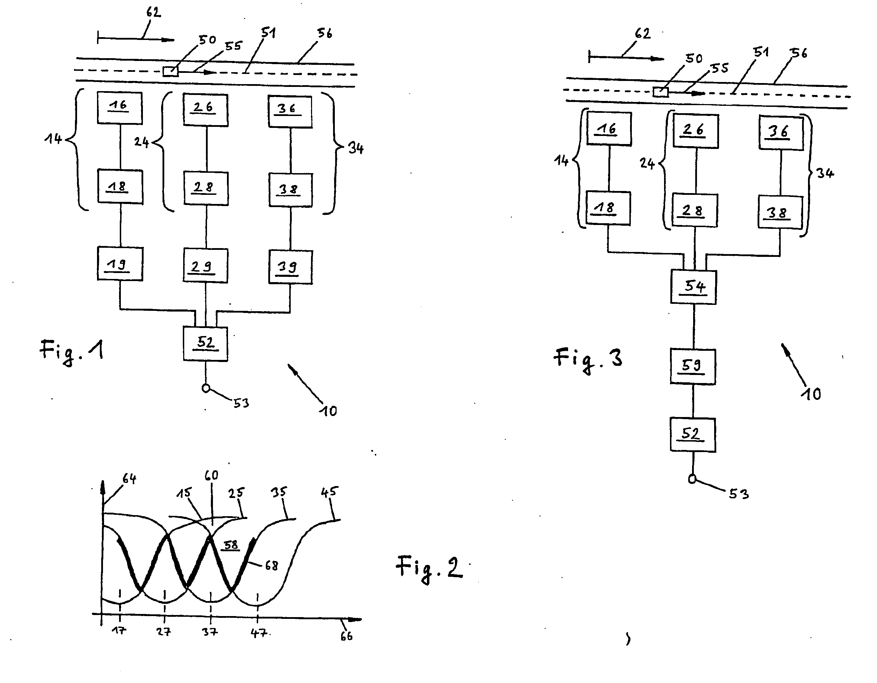

Abbildung 1 zeigt in einer schematischen Darstellung ein erstes Ausführungsbeispiel einer erfindungsgemäßen Vorrichtung 10. Entlang einer zu überwachenden Wegstrecke 51 auf einer Beförderungsbahn 56, bei der es sich beispielsweise um ein Fließband handeln kann, sind insgesamt drei Nachweiseinrichtungen 14, 24, 34 angeordnet. Die Nachweiseinrichtungen 14, 24, 34 weisen jeweils ein Spulensystem mit einer Induktivität 16, 26, 36 als Teil eines Oszillators 18, 28, 38 auf.

Die Nachweiseinrichtungen 14, 24, 34 nutzen den auch bei Näherungsschaltern wirksamen Effekt einer Bedämpfung einer Induktivität, die Teil eines Oszillators ist, wenn das nachzuweisende Zielobjekt in die Nähe dieser Induktivität 16, 26, 36 gebracht wird. Abhängig von einer relativen Lage eines zu überwachenden Objekts 50 zu den Induktivitäten 16, 26, 36 werden also die Oszillatoren 18, 28, 38 gedämpft. Zur Umsetzung dieser jeweils von den Nachweiseinrichtungen 16, 26, 36 erfassten Bedämpfungen in Analogsignale, insbesondere Strom- und/oder Spannungssignale, sind die Oszillatoren 18, 28, 38 jeweils mit Umsetzeinrichtungen 19, 29, 39 verbunden.

Die von den Umsetzeinrichtungen 19, 29, 39 gelieferten Messsignale sind aus prinzipiellen messtechnischen Gründen mehrdeutig, so dass aus einem bestimmten Messsignal noch nicht eindeutig auf eine bestimmte Raumposition des Zielobjekts 50 geschlossen werden kann. Die Umsetzeinrichtungen 19, 29, 39 sind deshalb mit einer gemeinsamen Auswerteeinrichtung 52 zum Ermitteln einer eindeutigen Ortsposition aus den aus den jeweiligen Nachweiseinrichtungen 19, 29, 39 zurückgehenden Analogsignalen verbunden.

Im Unterschied zu analogen Näherungsschaltern wird bei der in Fig. 1 gezeigten Vorrichtung 10 nicht der Abstand des Zielobjekts 50 zu den Sensorflächen gemessen, sondern bei gleichbleibendem axialen Abstand die Änderung der Bedämpfung durch die Veränderung der Überdeckung der Induktivitäten 16, 26, 36 durch das Zielobjekt 50, was dem seitlichen, d.h. radialen Abstand zur Mitte der Spule bzw. der Spulenachse entspricht.

Die nachfolgende Verarbeitung durch entsprechende Hardware, z.B. durch einen hier nicht gezeigten Micro-Controller ermöglicht die Verknüpfung der Empfindlichkeitskurven dergestalt, dass die Zuordnung eindeutig wird und ein einzelnes Signal, das die Wegstrecke wiedergibt, ausgegeben werden kann.

Dabei kann eine einfache Auswertung oder auch eine VerhältnisAuswertung vorgenommen werden. Im ersten Fall, der nachstehend unter Bezugnahme auf Fig. 2 erläutert wird, werden jeweils nur Ausschnitte aus den Empfindlichkeitskurven für eine einzelne Nachweiseinrichtung berücksichtigt. Bei der Verhältnis-Auswertung werden mehrere Spulen gleichzeitig ausgewertet und es werden aus den erhaltenen Analogsignalen Verhältnisse gebildet, um auf diese Weise den genauen Wegpunkt zu ermitteln.

An einem Ausgang 53 wird ein Analogsignal bereitgestellt, welches im vorliegenden Beispiel bezogen auf eine Koordinatenachse 62 eine eindeutige Ortsposition des zu überwachenden Zielobjekts 50, dessen Bewegungsrichtung durch den Pfeil 55 angedeutet ist, darstellt.

Prinzipiell sind auch Auswerteeinrichtungen mit mehreren Ausgängen möglich, die die Position eines Zielobjekts 50 bezüglich weiterer Koordinatenachsen angeben.

Ein weiteres Ausführungsbeispiel einer erfindungsgemäßen Vorrichtung ist schematisch in Figur 3 dargestellt.

Äquivalente Komponenten sind dabei jeweils mit denselben Bezugszeichen wie in Figur 1 gekennzeichnet.

Im Unterschied zu dem Beispiel aus Figur 1 ist dort zwischen den Oszillatoren 18, 28, 38 und einer gemeinsamen Umsetzeinrichtung 59 eine Multiplexeinrichtung 54 zum Umschalten zwischen den einzelnen Oszillatoren 18, 28, 38 vorgesehen. Da nur eine Umsetzeinrichtung 59 erforderlich ist, bietet sich diese Variante insbesondere für Anwendungen an, bei denen eine besonders große Wegstrecke 51 überwacht werden soll, d.h. wenn eine besonders große Anzahl von Nachweiseinrichtungen 14, 24, 34 erforderlich ist.

In der übrigen Funktionsweise entspricht die Ausgestaltung nach Figur 3 dem im Zusammenhang mit Figur 1 beschriebenen Beispiel.

In Figur 2 ist schematisch der Verlauf der Empfindlichkeitskurven 15, 25, 35, 45 von insgesamt vier Nachweiseinrichtungen gezeigt. Dargestellt ist jeweils das Ausgangssignal der entsprechenden Umsetzeinrichtung auf der vertikalen Achse 64 gegenüber der Ortskoordinate auf der horizontalen Achse 66.

Wie aus Figur 2 ersichtlich, weisen die Empfindlichkeitskurven 15, 25, 35, 45 jeweils ein Minimum 17, 27, 37, 47 auf, was einem minimalen Abstand des Zielobjekts 50 bezüglich der jeweiligen Induktivität 16, 26, 36, d.h. einer maximalen Bedämpfung entspricht. Das Zielobjekt 50 steht dann unmittelbar vor der jeweiligen Induktivität 16, 26, 36. Im vorliegenden Beispiel sind die Spulenachsen der Induktivitäten 16, 26, 36 senkrecht zu der zu überwachenden Wegstrecke 51 angeordnet, was sich in einem symmetrischen Verlauf der Empfindlichkeitskurven 15, 25, 35, 45 beiderseits des Minimums 17, 27, 37, 47 niederschlägt. Je weiter sich das Zielobjekt 50 von dem Minimum 17, 27, 37, 47 entfernt, desto größer ist der Wert der entsprechenden Empfindlichkeitskurve 15, 25, 35, 45 oder umso geringer ist die jeweilige Bedämpfung.

Die Nachweiseinrichtungen sind relativ zueinander so angeordnet, dass beispielsweise die Empfindlichkeitskurven 35, 45, die zu benachbarten Nachweiseinrichtungen gehören, auf etwa 30 % ihrer Fläche überlappen. Der Überlappungsbereich ist dabei mit dem Bezugszeichen 58 gekennzeichnet. Experimente haben gezeigt, dass mit Überlappungswerten im Bereich von 30 % eine hinreichende Zuverlässigkeit der Ortsbestimmung bei noch vertretbarer Anzahl der notwendigen Nachweiseinrichtungen erzielt wird.

Die Empfindlichkeitskurven von Nachweiseinrichtungen, die durch jeweils eine weitere Nachweiseinrichtung getrennt zueinander angeordnet sind, überlappen bei dem in Figur 3 gezeigten Beispiel auf etwa 10 % ihrer Fläche. Der beispielhaft gezeigte Überlappungsbereich der Kurven 25, 45 ist mit dem Bezugszeichen 60 gekennzeichnet.

Für die Auswertung werden nur die mit der dickeren Linie 68 gekennzeichneten Abschnitte der Empfindlichkeitskurven 15, 25, 35, 45 herangezogen. Die Bereiche 68 der Empfindlichkeitskurven 15, 25, 35 entsprechen gerade den Bereichen hoher Ortsauflösung dieser Bedämpfungskurven.

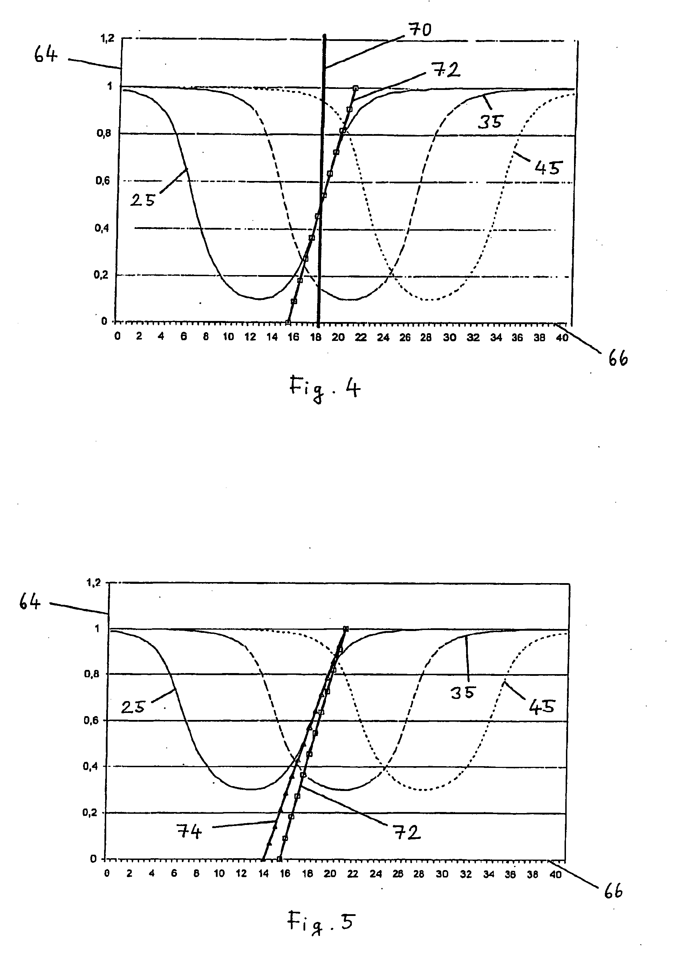

Weitere Beispiele für den Verlauf der Empfindlichkeits- oder Bedämpfungskurven 25, 35, 45 sind in den Fig. 4 bis 6 dargestellt. Aufgetragen ist dort jeweils die Schwingungsamplitude des Oszillators der jeweiligen Nachweiseinrichtung in normierten Einheiten auf der Ordinate 64 gegenüber der Position des Zielobjekts 50 entlang der überwachenden Wegstrecke. Die Position ist an der Abszisse 66 dabei in Millimetern angegeben. Äquivalente Komponenten sind in den Fig. 4 bis 6 jeweils mit denselben Bezugszeichen dargestellt.

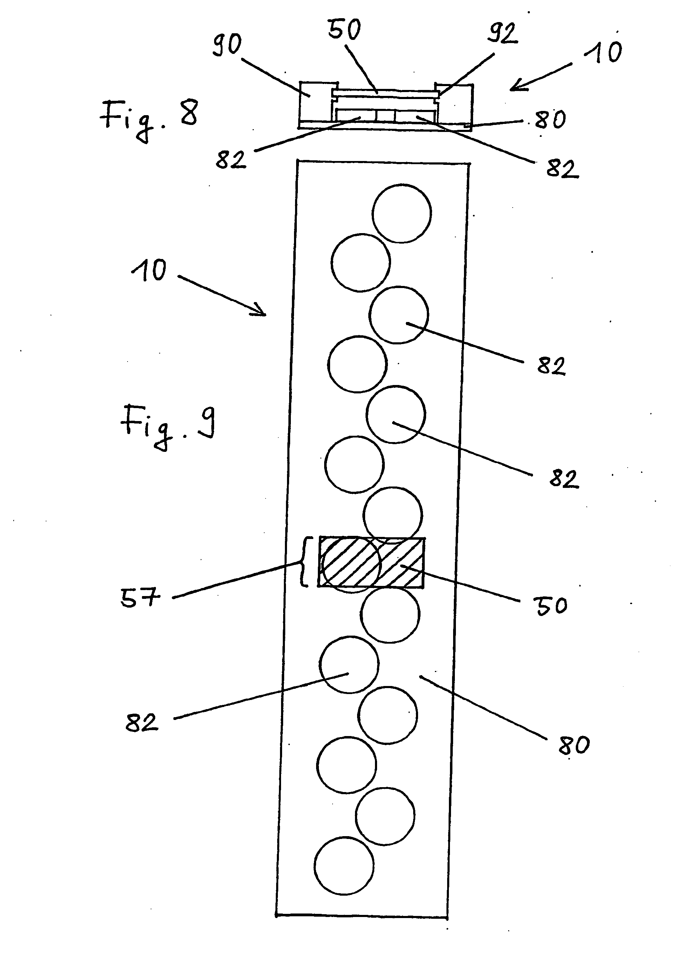

Der Aufbau der dabei verwendeten Vorrichtung 10 ist in den Fig. 8 und 9 schematisch gezeigt. Die Vorrichtung 10 besteht im Wesentlichen aus einer Leiterplatte 80, auf der insgesamt vierzehn Sensoren 82 angeordnet sind. Der für die Sensoren 82 jeweils dargestellte Kreis entspricht etwa der Umrandung eines Spulenkerns der Induktivität des Oszillators.

Als Target oder Zielobjekt 50 dient im gezeigten Beispiel ein dünnes Metallplättchen 50, welches in Führungsnuten 92 einer Führungseinrichtung beweglich gelagert ist. Wie aus Fig. 8 ersichtlich, ist die Leiterplatte 80 so relativ zu der Führungseinrichtung 90 positioniert, dass das Target 50 über die einzelnen Sensoren 82 geführt wird, wenn es entlang den Führungsnuten 92 bewegt wird.

Die in den Fig. 8 und 9 gezeigte Vorrichtung 10 kann in einem Kraftspanner zum Einsatz kommen, mit dem beispielsweise bei der Automobilfertigung zwei miteinander zu verschweißende Bleche festgehalten werden. Ein solcher Kraftspanner fährt, z.B. mit Hilfe von Druckluft, seine Backen immer bis auf Anschlag an die festzuhaltenden Bleche. Das Target 50 ist dabei mechanisch so mit den Backen verbunden, dass die Winkelposition über eine monotone Funktion mit der linearen Position des Targets 50 in der Führungseinrichtung 90, die in einer alternativen Gestaltung auch als Zylinder ausgebildet sein kann, zusammenhängt. Die Position des Targets 50 wird dann mit Hilfe der erfindungsgemäßen Vorrichtung 10 gemessen.

Vor Aufnahme des eigentlichen Betriebs werden bei dem gezeigten Ausführungsbeispiel der erfindungsgemäßen Vorrichtung 10 entsprechend einer Variante des erfindungsgemäßen Verfahrens Eich-oder Einlernkurven aufgenommen, wobei das jeweilige Zielobjekt 50 entlang der zu überwachenden Wegstrecke geführt und jeweils die Position des Zielobjekts 50 und die jeweiligen Bedämpfungen der einzelnen Sensoren 82 mitgeschrieben werden. Die Bestimmung der Position des Gegenstands bei Aufnahme der Einlernkurven kann im einfachsten Fall mit Hilfe eines Lineals erfolgen.

Um für die einzelnen Nachweiseinrichtungen prinzipiell identische Sensoreigenschaften zu erhalten, werden die Sensoren in einem ersten Schritt, beispielsweise mit einer Stahlplatte, die so vor die Leiterplatte 80 gehalten wird, dass alle Sensoren 82 denselben Abstand zu dieser Platte aufweisen, abgeglichen.

Die Aufnahme der Einlernkurven ergibt einen Satz von Kurven der in den Fig. 4 bis 6 gezeigten Art.

Im eigentlichen Messbetrieb wird dann aus den konkret gemessenen Bedämpfungssignalen unter Zuhilfenahme der Einlernkurven die jeweilige Position bestimmt.

Die Einlernkurven können beispielsweise viermal aufgenommen werden, wobei anschließend ein Mittelwert gebildet wird. Es ist auch möglich, für die ganz konkrete Anwendung die Einlernkurven jeweils mit den im tatsächlichen Betrieb des Kraftspanners festzuhaltenden Werkstücken, beispielsweise also den Blechen, aufzunehmen.

Durch unterschiedliche Effekte, insbesondere Verschleiß der Mechanik, Verschleiß von Kunststoffüberzügen oder Verschmutzungen, kann sich die Winkelposition der Backen des Kraftspanners und/oder die lineare Position des Zielobjekts 50 im geschlossenen Zustand verändern, obwohl sich die Dicke der jeweils eingelegten Bleche nicht ändert.

Wenn nun bei Beginn der Benutzungsaufnahme die Endpositionen, also die Zustände "Backen auf" und "Backen mit Blech geschlossen" einmal aufgezeichnet werden, kann durch Mitschreiben der Position des Zielobjekts 50 im geschlossenen Zustand über eine längere Betriebsphase eine Information über den Verschleiß des Kraftspanners gewonnen werden. Beispielsweise kann, wenn sich die Position des Zielobjekts 50 um mehr als einen festgelegten Wert von der ursprünglich ermittelten Position entfernt, der Kraftspanner oder zumindest Teile davon können ausgetauscht werden.

Prinzipiell ist es auch möglich, nach einer bestimmten Betriebszeit Eich- oder Einlernkurven erneut aufzunehmen.

Bei besonders bevorzugten Ausführungsbeispielen des Kraftspanners ändert sich die Übersetzung der Mechanik über den Winkelhub der Klemmbacken. Je weiter die Klemmbacken zufahren, umso größer ist der Linearverschub des Zielobjekts 50 pro Winkeleinheit.

Fig. 4 zeigt einen Ausschnitt aus den Bedämpfungskurven 25, 35, 45 von drei benachbart zueinander angeordneten Sensoren 82. Mit der vertikalen Geraden 70 ist beispielhaft eine Position des Zielobjekts 50 angedeutet. Aufgetragen ist jeweils die maximale Schwingungsamplitude der drei Oszillatoren der Sensoren 82. Im konkreten Beispiel sind die Achsen der Spulensysteme entlang der zu überwachenden Wegstrecke 8 mm voneinander beabstandet. Die Geometrie des Bedämpfungselements, d.h. des Zielobjekts 50, ist für den Verlauf der Bedämpfungskurven 25, 35, 45 entscheidend.

Die in Fig. 4 gezeigten Kurven wurden mit einem Bedämpfungselement, d.h. einem Zielobjekt 50, mit einer Breite von 8 mm aufgenommen. In Fig. 9 ist diese Breite mit der Klammer 57 angedeutet. Ist das Zielobjekt 50 breiter oder schmaler, verschieben sich die Schnittpunkte der Kurven und die Ortsauflösung entlang der zu überwachenden Wegstrecke verringert sich, da dann Kurvenbereiche für die Auswertung herangezogen werden müssen, die eine geringere Steigung haben. Der Spannungshub in diesen Bereichen ist kleiner, so dass Streuungen, Messungenauigkeiten, eventuelle Temperaturverläufe usw. stärker zum Tragen kommen und die Auflösung sich dadurch verringert.

Die sich bei der Position der vertikalen Geraden 70 ergebenden Werte der Amplitude für die drei hier betrachteten Bedämpfungskurven 25, 35, 45 werden für die Positionsauswertung ausgenutzt.

Das einfachste Verfahren zur Ermittlung der Position besteht darin, die Kurven, die sich durch die Überdeckung der Spulensysteme ergeben, zwischen den jeweiligen Schnittpunkten durch Geraden anzunähern. Dies ist in Fig. 4 beispielhaft für den Bereich zwischen den Schnittpunkten der Geraden 25 und 35 gezeigt. Dieser Bereich wird in Fig. 4 durch eine Gerade 72 angenähert. Bei diesem Verfahren wird ein einzelnes Spulensystem zur Berechnung der Position des Zielobjekts 50 herangezogen. Dazu werden die Bedämpfungen sämtlicher Spulensysteme gemessen und die Spule mit der zweithöchsten Bedämpfung wird zur Positionsauswertung verwendet, da diese Spule den steilsten Spannungsverlauf in dem betrachteten Bereich aufweist.

Dieses Verfahren kann aber noch verbessert werden, da eine Veränderung des Abstands des Zielobjekts 50 quer zu der zu überwachenden Wegstrecke ebenfalls zu veränderten Bedämpfungen der Sensoren 82 führt. Hierdurch wird ebenfalls die Auflösung verringert, da eine Entfernung des Zielobjekts 50, also des Bedämpfungselements, von der Vorrichtung 10 quer zu der zu überwachenden Wegstrecke für einen einzelnen Sensor 82 denselben Effekt bewirkt wie eine seitliche Bewegung des Zielobjekts 50 entlang der zu überwachenden Wegstrecke. Entsprechend spielt es bei Annäherung des Zielobjekts 50 an einen einzelnen Sensor 82, die eine stärkere Bedämpfung des Oszillators nach sich zieht, keine Rolle, ob diese Annäherung entlang der zu überwachenden Wegstrecke oder quer dazu erfolgt.

Verändert man den Abstand des Zielobjekts 50, also des Bedämpfungselements, zu der Vorrichtung 10 quer zu der zu überwachenden Wegstrecke, ändern sich auch die Bedämpfungsamplituden der Oszillatoren der jeweiligen Sensoren 82 deutlich. Dies ist anschaulich in Fig. 5 zu sehen, bei der der Abstand des Zielobjekts 50 um 0,5 mm gegenüber den Kurvenverläufen aus Fig. 4 erhöht wurde.

Eingetragen ist in Fig. 5 zusätzlich die Gerade 72, die der Linearisierung des Verlaufs der Kurve 25 zwischen den Schnittpunkten der Kurve 25 mit den Kurven 35 und 45 in Fig. 4 entspricht. Außerdem ist in Fig. 5 für die dortige Kurve 25 eine Gerade 74 eingezeichnet, die dem linearisierten Verlauf des Teilbereichs zwischen den Schnittpunkten der Kurve 25 mit den Kurven 35 und 45 entspricht.

Die in Fig. 4 gezeigten Bedämpfungskurven 25, 35 und 45 wurden bei einem Abstand des Zielobjekts 50 von 2,5 mm von den Sensoren 82 aufgenommen. Die Kurven 25, 35 und 45 aus Fig. 5 entsprechen einer Situation, bei der das Zielobjekt 50 3 mm von den Sensoren 82 beabstandet ist.

Aus dem unterschiedlichen Verlauf der Geraden 72 und 74 ergibt sich im relevanten Bereich zwischen den Schnittpunkten der Kurve 25 mit den Kurven 35 und 45 im ungünstigsten Fall eine Abweichung in der Positionsbestimmung, also ein Positionsfehler, von 1,35 mm. Die Auflösung und die Genauigkeit der Positionsbestimmung wird somit erheblich eingeschränkt, wenn das Bedämpfungselement nicht sehr genau einen vorgegebenen Abstand zu den Sensoren 82 einhält.

Bei einer vom Kunden vorgegebenen Anforderung von +/- 1 mm bei einer maximalen Abstandsänderung des Zielobjekts 50 von insgesamt 1,5 mm wäre das hier beschriebene Verfahren also nicht geeignet.

Um diesem Umstand Rechnung zu tragen, wurde erfindungsgemäß ein Auswertungsverfahren entwickelt, das die Berechnung der Position weitestgehend unabhängig vom Abstand des Bedämpfungselement, also des Zielobjekts 50 zu den das Spulensystem bildenden Sensoren 82 macht.

Bei diesem Verfahren wird zusätzlich die Bedämpfung der Spule berücksichtigt, die direkt unter der Bedämpfungsfahne, also direkt unter dem Zielobjekt 50 liegt. Dies ist der Sensor, der die größte Bedämpfung erfährt. Zudem wird zur Positionsbestimmung entlang der zu überwachenden Wegstrecke nicht mehr eine interpolierende Gerade verwendet.

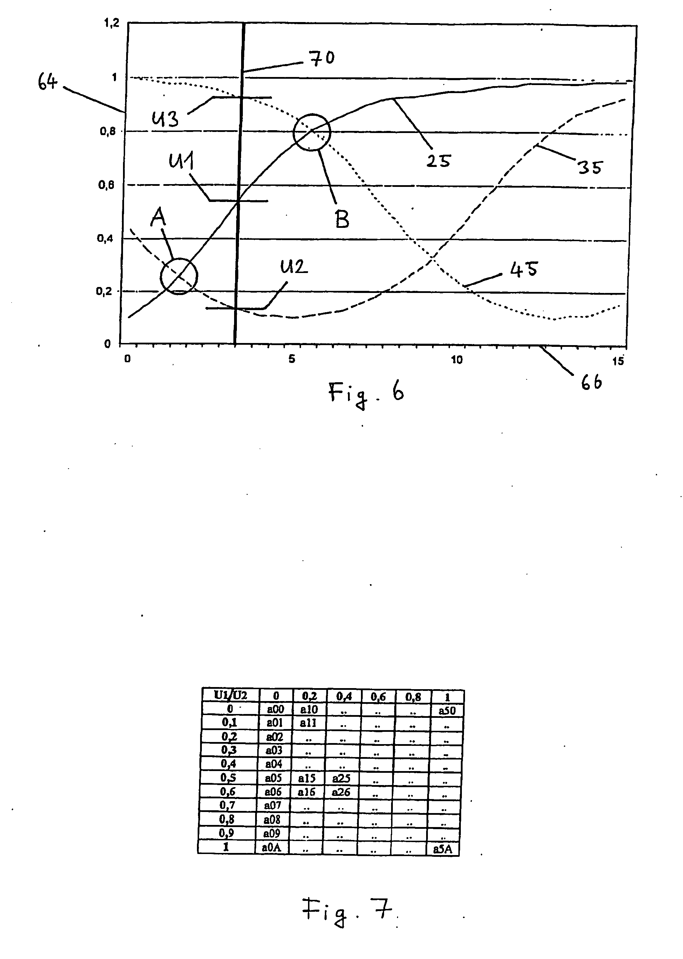

Dies wird anhand der Fig. 6 und 7 erläutert.

Die in Fig. 6 durch die vertikale Gerade 70 angedeutete Position des Zielobjekts 50 liegt zwischen den Schnittpunkten A und B der Kurve 25 mit Kurve 35 bzw. 45. Die Spannung U1 der Bedämpfungskurve 25 ist in diesem Bereich größer als die durch den Kurvenverlauf 35 der einen Nachbarspule gegebene Spannung U2, liegt jedoch unter der Spannung U3 der anderen Nachbarspule, die durch die Kurve 45 dargestellt ist. Die Spannungen der einzelnen Sensoren 82 sind auf einen Bereich von 0,1 bis 1 Volt normiert bzw. skaliert. Generell kann auf beliebige Werte normiert oder skaliert werden. Einzige Voraussetzung ist, dass alle Spulensysteme, also alle Sensoren 82, einzeln auf einen definierten Bereich skaliert oder normiert werden, um Toleranzen zwischen den einzelnen Spulen und Bauteilen der Auswerteeinheiten, beispielsweise der Oszillatoren, auszugleichen. Dies kann z.B. in der Art erfolgen, dass die Oszillatoren auf gleiche Amplitude bei gleicher Überdeckung aller Spulen und gleichem Abstand des Bedämpfungselements, also des Zielobjekts 50, zu den Spulen abgeglichen werden. Praktisch kann dies durch Abgleich bei gleichzeitiger Bedämpfung aller Spulen mit einer großen Stahlplatte in definiertem Abstand erfolgen.

Eine Kernidee des Auswerteverfahrens ist es, die Tatsache auszunutzen, dass für jedes Wertepaar von Spannungen U1 und U2 im Bereich von Punkt A bis Punkt B genau eine zugehörige Position existiert, so dass eine eindeutige Zuordnung möglich ist. Jedem dieser Wertepaare kann ebenso genau ein Abstand, d.h. eine Entfernung des Zielobjekts 50 von den Sensoren 82 quer zu der zu überwachenden Wegstrecke, zugeordnet werden.

Allgemein wird in der vorliegenden Beschreibung unter dem Begriff "Position" der Ort des Zielobjekts 50 an einer bestimmten Stelle der zu überwachenden Wegstrecke verstanden. Im Unterschied dazu wird mit "Abstand" die jeweilige Entfernung des Zielobjekts 50 von den Sensoren 82 quer zu der zu überwachenden Wegstrecke bezeichnet.

Bei den häufigsten Anwendungsfällen soll die Position des Zielobjekts 50 ermittelt werden. Nachstehend wird erläutert, wie dies anhand eines Wertepaars erfolgen kann. Prinzipiell ist aber auch die Auswertung des Abstands des Bedämpfungselements, also des Zielobjekts 50 zu den Sensoren 82 als Verfahrensgröße möglich. Die Auswertung erfolgt dabei weitgehend identisch.

Der Verlauf der Position in Abhängigkeit der beiden Größen U1 und U2 kann durch Mitschreiben von Messwerten in definierten Schritten erfolgen. Hierzu wird die Position des Zielobjekts 50 in definierter Schrittweite variiert und an jeder Position wird wiederum der Abstand des Zielobjekts 50 in definierter Schrittweite verändert.

Die so gewonnenen Messwertpaare können dann durch mathematische Verfahren angenähert werden, so dass auch eine exakte Positionsbestimmung zwischen diesen Messwerten erfolgen kann. Bei einer einfachen Variante wird z.B. zwischen den einzelnen Punkten mit Hilfe einer Messwerttabelle interpoliert. Hierzu legt man die Messwertpaare in einer zweidimensionalen Tabelle mit den Achsen U1 und U2 an und trägt in die jeweiligen Zellen der Tabelle die zugehörige Position ein. Eine solche Tabelle ist in Fig. 7 dargestellt.

Zur Positionsberechnung sucht man nun in der Tabelle den zum jeweiligen Wertepaar nächstniedrigeren Eintrag aus und berechnet mit Hilfe der benachbarten Werte durch Interpolation die tatsächliche Position des zu überwachenden Zielobjekts 50.

Beispielsweise wird das Wertepaar (U1, U2)=(0,535 ; 0,28) durch Messung ermittelt. Der nächstniedrigere Tabelleneintrag hierzu ist a15. Die tatsächliche Position des Zielobjekts 50 kann nun durch Interpolation aus den Einträgen a15, a16, a25 und a26 berechnet werden.

Wenn die Tabelle statt mit den Werten für die jeweiligen Positionen mit denjenigen für unterschiedliche Abstände gefüllt wird, kann auf gleiche Weise die Berechnung des Abstands des Bedämpfungselements unabhängig von der Position erfolgen. Durch Verwendung beider Tabellen kann außerdem eine zweidimensionale Erfassung durchgeführt werden, bzw. bei geeigneter Anordnung der Spulensysteme, beispielsweise in einem Rechteck, auch eine dreidimensionale Erfassung.

Die Berechnung mittels Tabelle und Interpolation ist besonders für leistungsschwache Systeme geeignet, da sie nur sehr geringe Anforderungen an die Rechenleistung stellt. Wenn mehr Rechenleistung zur Verfügung steht, kann der Positionsverlauf oder der Abstandsverlauf der Wertepaare auch durch eine lineare, stetige Funktion angenähert werden. Damit ist eine genauere Berechnung bzw. eine höhere Auflösung möglich.

Im Hinblick auf die erreichbare Ortsauflösung spielt die Anordnung der Sensoren, genauer: der Abstand der Sensoren eine wichtige Rolle. Wenn man beispielsweise die Bedämpfungskurve eines einzigen Sensors 82 betrachtet, ist die Auflösung im Bereich des linken und rechten Schenkels des Minimums groß, ansonsten aber klein. Beispielsweise ist sie im Minimum praktisch Null. Die Abstände der Sensoren 82 sind bei der in den Fig. 8 und 9 gezeigten Variante nun gerade so gewählt, dass zwischen den Schnittpunkten der Kurven 25, 35, 45 jeweils praktisch nur steile Bereiche liegen, die Auflösung also überall groß ist.

Eine weitere Verbesserung der Ortsauflösung kann dadurch erzielt werden, dass das Zielobjekt 50 in seinen Dimensionen so gewählt wird, dass die einzelnen Sensoren 82 nicht mehr vollständig überdeckt werden können. Durchgeführte Tests haben beispielsweise ergeben, dass zwischen 8/9 und 9/9 Überdeckung eines Sensors praktisch keine Änderung der Bedämpfung mehr festzustellen war.

Wenn nun das zu überwachende Zielobjekt 50 etwas kleiner gewählt wird, kann erreicht werden, dass die Minima der Bedämpfungskurven schärfer werden. Das in Fig. 9 gezeigte Zielobjekt 50 weist eine Breite 57 von 8 mm auf, wohingegen der Durchmesser der Sensoren 82 jeweils 9 mm beträgt.

Weiterhin ergibt sich aus der Anforderung einer konstant großen Auflösung über die gesamte Wegstrecke ein bestimmter Abstand der Sensoren 82. Wenn nun dieser Abstand kleiner ist, als ein Durchmesser der Sensoren, kann, wie im vorliegenden Beispiel, eine Zick-Zack-Anordnung gewählt werden.

In der hier gezeigten Situation ist das Zielobjekt ein Metallplättchen mit einer Länge von 16 mm, einer Breite von 8 mm und einer Dicke von 1 mm. Der Durchmesser der Sensoren beträgt 9 mm. Als idealer Abstand der Sensoren im Hinblick auf eine große Ortsauflösung wurde 8 mm ermittelt. Die insgesamt 14 Sensoren sind, wie aus Fig. 9 ersichtlich, in zwei Reihen gegeneinander versetzt angeordnet, wobei der Abstand der Mittelpunkte zweier Sensoren 82 auf derselben Reihe 16 mm beträgt. Der Abstand zum nächstliegenden Sensor 82 auf der gegenüberliegenden Seite beträgt jeweils 10 mm.

Das Zielobjekt 50 ist also gerade so dimensioniert, dass ein einzelner Sensor 82 nie vollständig überdeckt werden kann.

Mit einer entsprechenden Anordnung können selbstverständlich auch nichtgerade Wege überwacht werden. Hierzu müssen die Sensoren 82 lediglich entlang einer Kurve angeordnet werden.

Mit der vorliegenden Erfindung wird ein induktives lineares Wegmesssystem zur Erfassung eines metallischen Objekts über eine definierte Wegstrecke bereitgestellt, mit dem prinzipiell beliebig lange und beliebig geformte Wegstrecken überwacht werden können und das insbesondere auch die Überwachung von robusten metallischen Targets, die nicht ferromagnetisch zu sein brauchen, möglich macht.

## Patentansprüche

1. Vorrichtung zur Erfassung der Position eines, insbesondere metallischen, Zielobjekts (50), insbesondere zur Durchführung des Verfahrens nach einem der Ansprüche 16 bis 23, mit mindestens zwei Nachweiseinrichtungen (14, 24, 34), die entlang einer zu überwachenden Wegstrecke (51) so positioniert sind, dass sich die Empfindlichkeitskurven (15, 25, 35) von einander unmittelbar benachbarten Nachweiseinrichtungen (24, 24, 34) wenigstens teilweise überlappen, wobei die Nachweiseinrichtungen (14, 24, 34) jeweils mindestens eine Induktivität (16, 26, 36) und mindestens einen Oszillator (18, 28, 38) aufweisen und, abhängig von einer Entfernung des Zielobjekts (50) von der jeweiligen Nachweiseinrichtung (14, 24, 34), ein Entfernungssignal liefern, mit mindestens einer Umsetzeinrichtung (19, 29, 39, 59), die mit den Nachweiseinrichtungen (14, 24, 34) in Wirkverbindung steht, zum Umsetzen der von den Nachweiseinrichtungen (14, 24, 34) jeweils erfassten Entfernungssignale in Analogsignale, insbesondere Strom- und/oder Spannungssignale, und
mit mindestens einer Auswerteeinrichtung (52), die mit der Umsetzeinrichtung oder den Umsetzeinrichtungen (19, 29, 39, 59) in Wirkverbindung steht, zum Ermitteln und Ausgeben einer Ortsposition des Zielobjekts (50) aus den auf die jeweiligen Nachweiseinrichtungen (14, 24, 34) zurückgehenden Analogsignalen,
wobei von den Nachweiseinrichtungen (14, 24, 34) als Entfernungssignal jeweils ein Bedämpfungssignal des Oszillators ausgebbar ist,
**dadurch gekennzeichnet,**
**dass** eine Bedämpfungskurve einer Nachweiseinrichtung (14, 24, 34) jeweils Teilbereiche mit hoher Ortsauflösung aufweist,
**dass** die Nachweiseinrichtungen (14, 24, 34) so angeordnet sind, dass aus den Teilbereichen hoher Ortsauflösung der einzelnen Nachweiseinrichtungen (14, 24, 34) eine Nachweiskurve für die gesamte zu überwachende Wegstrecke zusammen gesetzt wird, und
**dass** die Nachweiseinrichtungen (14, 24, 34) zur Erhöhung der Ortsauflösung in zwei, insbesondere parallelen, Reihen jeweils versetzt angeordnet sind.

2. Vorrichtung nach Anspruch 1,
**dadurch gekennzeichnet ,**
**dass** in den Teilbereichen hoher Ortsauflösung die Ortsauflösung überall größer als 10 %, bevorzugt überall größer als 20 %, und besonders bevorzugt überall größer als 40 % der maximalen Ortsauflösung ist.

3. Vorrichtung nach einem der Ansprüche 1 oder 2,
**dadurch gekennzeichnet ,**
**dass** die Nachweiseinrichtungen (14, 24, 34) entlang der Wegstrecke äquidistant angeordnet sind.

4. Vorrichtung nach einem der Ansprüche 1 bis 3,
**dadurch gekennzeichnet ,**
**dass** eine Führungseinrichtung zum Führen des Zielobjekts (50) entlang der zu überwachenden Wegstrecke vorgesehen ist.

5. Vorrichtung nach einem der Ansprüche 1 bis 4,
**dadurch gekennzeichnet ,**
**dass** ein in der Führungseinrichtung beweglich angeordnetes Zielobjekt (50) vorgesehen ist.

6. Vorrichtung nach einem der Ansprüche 1 bis 5,
**dadurch gekennzeichnet , dass** die Nachweiseinrichtungen (14, 24, 34) entlang der zu überwachenden Wegstrecke so angeordnet sind, dass sie jeweils nur teilweise von dem Zielobjekt (50) überdeckbar sind.

7. Vorrichtung nach einem der Ansprüche 1 bis 6,
**dadurch gekennzeichnet , dass** die Nachweiseinrichtungen (14, 24, 34) entlang der zu überwachenden Wegstrecke so angeordnet sind, dass sie jeweils nur zu 90 %, bevorzugt nur zu 85 % und besonders bevorzugt nur zu 80 %, von dem Zielobjekt (50) überdeckbar sind.

8. Vorrichtung nach einem der Ansprüche 1 bis 7,
**dadurch gekennzeichnet ,**
**dass** das Zielobjekt (50) in seinen Dimensionen so gewählt oder ausgebildet ist, dass eine einzelne Nachweiseinrichtung (14, 24, 34) von dem Zielobjekt (50) nur teilweise überdeckbar ist.

9. Vorrichtung nach einem der Ansprüche 1 bis 8,
**dadurch gekennzeichnet ,**
**dass** das Zielobjekt (50) ein Metallplättchen ist.

10. Vorrichtung nach einem der Ansprüche 1 bis 9,
**dadurch gekennzeichnet,**
**dass** jeder Nachweiseinrichtung (14, 24, 34) eine Umsetzeinrichtung (19, 29, 39, 59) zugeordnet ist.

11. Vorrichtung nach einem der Ansprüche 1 bis 9,
**dadurch gekennzeichnet,**
**dass** mindestens eine Multiplexeinrichtung (54) zwischen einer Umsetzeinrichtung (59) und einer Mehrzahl von Nachweiseinrichtungen (14, 24, 34) vorgesehen ist.

12. Vorrichtung nach einem der Ansprüche 1 bis 11,
**dadurch gekennzeichnet , dass** die Induktivitäten (16, 26, 36), insbesondere die Spulen, der Nachweiseinrichtungen (14, 24, 34) mit ihren Achsen quer, insbesondere senkrecht, zu der zu überwachenden Wegstrecke (51) angeordnet sind.

13. Vorrichtung nach einem der Ansprüche 1 bis 12,
**dadurch gekennzeichnet,**
**dass** in zumindest einem Teil der Nachweiseinrichtungen (14, 24, 34) die Induktivität (16, 26, 36) als Teil des Oszillators (18, 28, 38) vorgesehen ist.

14. Vorrichtung nach einem der Ansprüche 1 bis 13,
**dadurch gekennzeichnet ,**
**dass** die Nachweiseinrichtungen (14, 24, 34) so angeordnet sind, dass die flächenmäßige Überlappung der Empfindlichkeitskurven (15, 25, 35) oder Bedämpfungskurven von einander unmittelbar benachbarten Nachweiseinrichtungen (14, 24, 34) zwischen 20 % und 50 %, insbesondere zwischen 25 % und 35 %, beträgt.

15. Vorrichtung nach einem der Ansprüche 1 bis 14,
**dadurch gekennzeichnet,**
**dass** von den Nachweiseinrichtungen (14, 24, 34) jeweils ein radialer Abstand des Zielobjekts (50) zu einer Achse der Induktivität (16, 26, 36) erfassbar ist.

16. Verfahren zur Erfassung der Position eines, insbesondere metallischen, Zielobjekts (50),
bei dem mindestens zwei Nachweiseinrichtungen (14, 24, 34) entlang einer zu überwachenden Wegstrecke (51) so positioniert werden, dass sich die Empfindlichkeitskurven (15, 25, 35) von einander unmittelbar benachbarten Nachweiseinrichtungen (24, 24, 34) wenigstens teilweise überlappen,
wobei die Nachweiseinrichtungen (14, 24, 34) jeweils in Abhängigkeit von der Entfernung des Zielobjekts ein Entfernungssignal liefern,
bei dem die von den Nachweiseinrichtungen (14, 24, 34) jeweils erfassten Entfernungssignale von mindestens einer Umsetzeinrichtung (19, 29, 39, 59) in Analogsignale, insbesondere Strom- und/oder Spannungssignale umgesetzt werden, und bei dem aus den verschiedenen, auf die jeweiligen Nachweiseinrichtungen (14, 24, 34) zurückgehenden Analogsignalen die Position des Zielobjekts (50) ermittelt wird,
wobei als Entfernungssignal jeweils Bedämpfungssignale von Oszillatoren der Nachweiseinrichtungen (14, 24, 34) verwendet werden,
**dadurch gekennzeichnet,**
**dass** zur Auswertung das Bedämpfungssignal der Nachweiseinrichtung mit der zweitgrößten Bedämpfung herangezogen wird,
**dass** die Nachweiseinrichtungen (14, 24, 34) so angeordnet werden, dass aus Teilbereichen mit hoher Ortsauflösung der Bedämpfungskurven der einzelnen Nachweiseinrichtungen (14, 24, 34) eine Nachweiskurve für die gesamte zu überwachende Wegstrecke zusammen gesetzt wird und
**dass** zur Bestimmung der Position des Zielobjekts (50) die gemessenen Bedämpfungswerte mit zuvor, insbesondere punktweise, aufgenommenen Einlerndaten verglichen werden.

17. Verfahren nach Anspruch 16,
**dadurch gekennzeichnet,**
**dass** zur Aufnahme der Einlerndaten das Zielobjekt (50) entlang der zu überwachenden Wegstrecke geführt wird, wobei die Position des Zielobjekts (50) und die jeweiligen Bedämpfungssignale der Nachweiseinrichtungen (14, 24, 34) mitgeschrieben werden.

18. Verfahren nach einem der Ansprüche 16 oder 17,
**dadurch gekennzeichnet ,**
**dass** bei der Aufnahme der Einlerndaten die Position des Zielobjekts (50) auch quer zu der zu überwachenden Wegstrecke variiert wird, wobei auch hierbei jeweils die Positionen und jeweiligen Bedämpfungssignale mitgeschrieben werden.

19. Verfahren nach einem der Ansprüche 16 bis 18,
**dadurch gekennzeichnet ,**
**dass** die Empfindlichkeitskurven (15, 25, 35) der Nachweiseinrichtungen (14, 24, 34) normiert werden.

20. Verfahren nach einem der Ansprüche 16 bis 19,
**dadurch gekennzeichnet,**
**dass** zur Auswertung ein Wertepaar, bestehend aus dem Bedämpfungssignal mit der zweitgrößten und der größten Bedämpfung, herangezogen wird.

21. Verfahren nach einem der Ansprüche 16 bis 20,
**dadurch gekennzeichnet ,**
**dass** zur Bestimmung der Position des Zielobjekts (50) zwischen Punkten der Einlerndaten interpoliert wird.

22. Verfahren nach einem der Ansprüche 16 bis 21,
**dadurch gekennzeichnet ,**
**dass** die Teilstücke der Bedämpfungskurven für die Auswertung jeweils durch Geraden angenähert werden.

23. Verfahren nach einem der Ansprüche 16 bis 22,
**dadurch gekennzeichnet ,**
**dass** zur Auswertung jeweils nur ein Abschnitt einer Nachweiseinrichtung (14, 24, 34) berücksichtigt wird oder dass mehrere Nachweiseinrichtungen (14, 24, 34) gleichzeitig ausgewertet werden, insbesondere Verhältnisse aus den Analogsignalen gebildet werden.

## Claims

1. Device for establishing the position of an in particular metallic target object (50), particularly for performing the method according to one of the claims 16 to 23, having at least two detecting devices (14, 24, 34) which are so positioned along a path length (51) to be monitored that the sensitivity curves (15, 25, 35) of immediately adjacent detecting devices (14, 24, 34) at least partly overlap,
the detecting devices (14, 24, 34) having in each case at least one inductor (16, 26, 36) and at least one oscillator (18, 28, 38) and, in dependence of a distance from the target object (50) to the given detecting device (14, 24, 34), supply a distance signal, with at least one converting device (19, 29, 39, 59) operatively connected to the detecting devices (14, 24, 34) for converting the distance signals in each case established by the detecting devices (14, 24, 34) into analog signals, particularly current and/or voltage signals and
with at least one evaluating device (52) operatively connected to the converting device or devices (19, 29, 39, 59) for determining and outputting a spatial position of the target object (50) from the analog signals in each case going back to the detecting devices (14, 24, 34),
the detecting devices (14, 24, 34) in each case outputting as the distance signal a damping signal of the oscillator,
**characterized in that**
a damping curve of a detecting device (14, 24, 34) in each case has partial areas with high spatial resolution, the detecting devices (14, 24, 34) are so positioned that a detecting curve for the complete path length to be monitored is formed from the partial areas having high spatial resolution of the individual detecting devices (14, 24, 34) and
for increasing the spatial resolution, the detecting devices (14, 24, 34) are in each case offset in two, particularly parallel rows.

2. Device according to claim 1,
**characterized in that**
in the partial areas having high spatial resolution the spatial resolution is everywhere greater than 10%, preferably everywhere greater than 20% and in particularly preferred manner everywhere greater than 40% of the maximum spatial resolution.

3. Device according to one of the claims 1 or 2,
**characterized in that**
the detecting devices (14, 24, 34) are equidistantly positioned along the path length.

4. Device according to one of the claims 1 to 3,
**characterized in that**
a guide device for guiding the target object (50) is provided along the path length to be monitored.

5. Device according to one of the claims 1 to 4,
**characterized in that**
there is provided a target object (50) movably positioned in the guide device.

6. Device according to one of the claims 1 to 5,
**characterized in that**
the detecting devices (14, 24, 34) are so positioned along the path length to be monitored that they are in each case only partly covered by the target object (50).

7. Device according to one of the claims 1 to 6,
**characterized in that**
the detecting devices (14, 24, 34) are so positioned along the path length to be monitored that they are in each case only covered up to 90%, preferably only up to 85% and in particularly preferred manner only up to 80% by target object (50).

8. Device according to one of the claims 1 to 7,
**characterized in that**
the dimensions of the target object (50) are so selected or it is so constructed that an individual detecting device (14, 24, 34) is only partly covered by the target object (50).

9. Device according to one of the claims 1 to 8,
**characterized in that**
the target object (50) is a small metal plate.

10. Device according to one of the claims 1 to 9,
**characterized in that**
with each detecting device (14, 24, 34) is associated a converting device (19, 29, 39, 59).

11. Device according to one of the claims 1 to 9,
**characterized in that**
at least one multiplex device (54) is provided between a converting device (59) and a plurality of detecting devices (14, 24, 34).

12. Device according to one of the claims 1 to 11,
**characterized in that**
the inductors (16, 26, 36), particularly the coils, of the detecting devices (14, 24, 34) have their axes positioned transversely, particularly perpendicularly to the path length (51) to be monitored.

13. Device according to one of the claims 1 to 12,
**characterized in that**
in at least one part of the detecting devices (14, 24, 34) the inductor (16, 26, 36) is provided as part of the oscillator (18, 28, 38).

14. Device according to one of the claims 1 to 13,
**characterized in that**
the detecting devices (14, 24, 34) are so positioned that the areal overlap of the sensitivity curves (15, 25, 35) or damping curves of mutually immediately adjacent detecting devices (14, 24, 34) is between 20 and 50%, particularly between 25 and 35%.

15. Device according to one of the claims 1 to 14,
**characterized in that**
the detecting devices (14, 24, 34) can in each case establish a radial distance from the target object (50) to an axis of the inductor (16, 26, 36).

16. Method for establishing the position of an in particular metallic target object (50), in which at least two detecting devices (14, 24, 34) are so positioned along a path length (51) to be monitored that the sensitivity curves (15, 25, 35) of mutually immediately adjacent detecting devices (14, 24, 34) at least partly overlap, in which the detecting devices (14, 24, 34) in each case supply a distance signal as a function of the distance from the target object,
in which the distance signals in each case established by the detecting devices (14, 24, 34) are converted by at least one converting device (19, 29, 39, 59) into analog signals, particularly current and/or voltage signals and
in which the position of the target object (50) is determined from the different analog signals going back to the given detecting devices (14, 24, 34), in which as the distance signal is in each case used damping signals of oscillators of the detecting devices (14, 24, 34),
**characterized in that**
for evaluation purposes use is made of the damping signal of the detecting device with the second greatest damping,
that the detecting devices (14, 24, 34) are so positioned that from partial areas having high spatial resolution of the damping curves of the individual detecting devices (14, 24, 34) is formed a detection curve for the complete path length to be monitored and
that for determining the position of the target object (50) the measured damping values are compared with previously and in particular point-by-point recorded teach-in data.

17. Method according to claim 16,
**characterized in that**
for recording the teach-in data, the target object (50) is guided along the path length to be monitored, the position of the target object (50) and the respective damping signals of the detecting devices (14, 24, 34) being logged.

18. Method according to one of the claims 16 or 17,
**characterized in that**
during the recording of the teach-in data, the position of the target object (50) is also varied transversely to the path length to be monitored and here again the positions and damping signals are in each case logged.

19. Method according to one of the claims 16 to 18,
**characterized in that**
the sensitivity curves (15, 25, 35) of the detecting devices (14, 24, 34) are standardized.

20. Method according to one of the claims 16 to 19,
**characterized in that**
for evaluation purposes use is made of a pair of values consisting of the damping signal with the second greatest and the greatest damping.

21. Method according to one of the claims 16 to 20,
**characterized in that**
interpolation takes place between points of the teach-in data for determining the position of the target object (50).

22. Method according to one of the claims 16 to 21,
**characterized in that**
for evaluation purposes the portions of the damping curves are in each case approximated by straight lines.

23. Method according to one of the claims 16 to 22,
**characterized in that**
for evaluation purposes in each case account is only taken of a section of a detecting device (14, 24, 34) or that several detecting devices (14, 24, 34) are simultaneously evaluated and in particular ratios are formed from the analog signals.

## Revendications

1. Dispositif pour relever la position d'un objet cible (50), en particulier métallique, en particulier pour appliquer le procédé selon l'une quelconque des revendications 16 à 23, avec au moins deux dispositifs de détection (14, 24, 34) qui sont positionnés le long d'une trajectoire (51) à surveiller de telle manière que les courbes de sensibilité (15, 25, 35) de dispositifs de détection (14, 24, 34) directement voisins l'un de l'autre se chevauchent au moins partiellement, dans lequel les dispositifs de détection (14, 24, 34) présentent chacun au moins une inductance (16, 26, 36) et au moins un oscillateur (18, 28, 38) et, selon un éloignement de l'objet cible (50) par rapport au dispositif de détection (14, 24, 34) concerné, délivrent un signal d'éloignement, avec au moins un dispositif de conversion (19, 29, 39, 59) qui est en liaison active avec les dispositifs de détection (14, 24, 34), pour convertir les signaux d'éloignement relevés dans chaque cas par les dispositifs de détection (14, 24, 34) en des signaux analogiques, en particulier des signaux de courant et/ou de tension, et
avec au moins un dispositif d'analyse (52) qui est en liaison active avec le dispositif de conversion ou les dispositifs de conversion (19, 29, 39, 59), pour déterminer et délivrer une position de localisation de l'objet cible (50) à partir des signaux analogiques provenant des dispositifs de détection (14, 24, 34) respectifs,
dans lequel, comme signal d'éloignement, dans chaque cas un signal d'amortissement de l'oscillateur peut être délivré par les dispositifs de détection (14, 24, 34),
***caractérisé en ce qu***'une courbe d'amortissement d'un dispositif de détection (14, 24, 34) présente dans chaque cas des zones partielles de grande résolution locale,
***en ce que*** les dispositifs de détection (14, 24, 34) sont disposés de telle sorte
qu'à partir des zones partielles de grande résolution locale des divers dispositifs de détection (14, 24, 34), une courbe de détection est composée pour toute la trajectoire à surveiller, et
***en ce que,*** pour augmenter la résolution locale, les dispositifs de détection (14, 24, 34) sont disposés en deux rangées, en particulier parallèles, avec un décalage dans chaque cas.

2. Dispositif selon la revendication 1,
***caractérisé en ce que,*** dans les zones partielles de grande résolution locale, la résolution locale est partout supérieure à 10 %, de préférence partout supérieure à 20 %, et de plus grande préférence partout supérieure à 40 % de la résolution locale maximale.

3. Dispositif selon l'une quelconque des revendications 1 ou 2,
***caractérisé en ce que*** les dispositifs de détection (14, 24, 34) sont placés à équidistance le long de la trajectoire.

4. Dispositif selon l'une quelconque des revendications 1 à 3,
***caractérisé en ce qu***'un dispositif de guidage est prévu pour guider l'objet cible (50) le long de la trajectoire à surveiller.

5. Dispositif selon l'une quelconque des revendications 1 à 4,
***caractérisé en ce qu***'il est prévu un objet cible (50) placé mobile dans la direction de guidage.

6. Dispositif selon l'une quelconque des revendications 1 à 5,
***caractérisé en ce que*** les dispositifs de détection (14, 24, 34) sont disposés le long de la trajectoire à surveiller de telle manière qu'ils ne peuvent être recouverts chacun que partiellement par l'objet cible (50).

7. Dispositif selon l'une quelconque des revendications 1 à 6,
***caractérisé en ce que*** les dispositifs de détection (14, 24, 34) sont disposés le long de la trajectoire à surveiller de telle manière qu'ils ne peuvent être recouverts chacun qu'à 90 %, de préférence qu'à 85 % et de plus grande préférence qu'à 80 % par l'objet cible (50).

8. Dispositif selon l'une quelconque des revendications 1 à 7,
***caractérisé en ce que*** l'objet cible (50) présente des dimensions choisies ou réalisées de telle façon qu'un dispositif de détection individuel (14, 24, 34) ne peut être recouvert que partiellement par l'objet cible (50).

9. Dispositif selon l'une quelconque des revendications 1 à 8,
***caractérisé en ce que*** l'objet cible (50) est une plaquette métallique.

10. Dispositif selon l'une quelconque des revendications 1 à 9,
***caractérisé en ce qu***'à chaque dispositif de détection (14, 24, 34) est associé un dispositif de conversion (19, 28, 39, 59).

11. Dispositif selon l'une quelconque des revendications 1 à 9,
***caractérisé en ce qu***'au moins un dispositif de multiplexage (54) est prévu entre un dispositif de conversion (59) et une pluralité de dispositifs de détection (14, 24, 34).

12. Dispositif selon l'une quelconque des revendications 1 à 11,
***caractérisé en ce que*** les inductances (16, 26, 36), en particulier les bobines, des dispositifs de détection (14, 24, 34) sont disposés avec leurs axes transversalement, en particulier perpendiculairement, à la trajectoire (51) à surveiller.

13. Dispositif selon l'une quelconque des revendications 1 à 12,
***caractérisé en ce que*** dans au moins une partie des dispositifs de détection (14, 24, 34), l'inductance (16, 26, 36) est prévue sous la forme d'une partie de l'oscillateur (18, 28, 38).

14. Dispositif selon l'une quelconque des revendications 1 à 13,
***caractérisé en ce que*** les dispositifs de détection (14, 24, 34) sont disposés de telle manière que le chevauchement de surface des courbes de sensibilité (15, 25, 35) ou courbes d'amortissement de dispositifs de détection (14, 24, 34) di-rectement voisins vaut entre 20 % et 50 %, en particulier entre 25 % et 35 %.

15. Dispositif selon l'une quelconque des revendications 1 à 14,
***caractérisé en ce qu***'une distance radiale de l'objet cible (50) par rapport à un axe de l'inductance (16, 26, 36) peut être relevée par les dispositifs de détection (14, 24, 34).

16. Procédé pour relever la position d'un objet cible (50), en particulier métallique, dans lequel au moins deux dispositifs de détection (14, 24, 34) sont positionnés le long d'une trajectoire (51) à surveiller de telle manière que les courbes de sensibilité (15, 25, 35) de dispositifs de détection (14, 24, 34) di-rectement voisins l'un de l'autre se chevauchent au moins partiellement,
dans lequel les dispositifs de détection (14, 24, 34) délivrent dans chaque cas un signal d'éloignement en fonction de l'éloignement de l'objet cible,
dans lequel les signaux de détection relevés par les dispositifs de détection (14, 24, 34) respectifs sont convertis par au moins un dispositif de conversion (19, 29, 39, 59) en des signaux analogiques, en particulier des signaux de courant et/ou de tension, et dans lequel la position de l'objet cible (50) est déterminée à partir des signaux analogiques provenant des dispositifs de détection (14, 24, 34) respectifs,
dans lequel, comme signal d'éloignement, dans chaque cas on utilise des signaux d'amortissement des oscillateurs des dispositifs de détection (14, 24, 34), ***caractérisé en ce que,*** pour l'analyse, on utilise le signal d'amortissement du dispositif de détection présentant le deuxième plus fort amortissement,
***en ce que*** les dispositifs de détection (14, 24, 34) sont disposés de telle sorte qu'à partir de zones partielles de grande résolution locale des divers dispositifs de détection (14, 24, 34), une courbe de détection est composée pour toute la trajectoire à surveiller, et
***en ce que,*** pour déterminer la position de l'objet cible (50), les valeurs d'amortissement mesurées sont comparées à des données d'apprentissage préalablement enregistrées, en particulier par points.

17. Procédé selon la revendication 16,
***caractérisé en ce que,*** pour enregistrer les données d'apprentissage, l'objet cible (50) est guidé le long de la trajectoire à surveiller, la position de l'objet cible (50) et les signaux d'amortissement respectifs des dispositifs de détection (14, 24, 34) sont également inscrits.

18. Procédé selon l'une quelconque des revendications 16 ou 17,
***caractérisé en ce que,*** lors de l'enregistrement des données d'apprentissage, on fait varier la position de l'objet cible (50) même transversalement à la trajectoire à mesurer, les positions et les signaux d'amortissement respectifs étant, là
encore, également inscrits.

19. Procédé selon l'une quelconque des revendications 16 à 18,
***caractérisé en ce que*** les courbes de sensibilité (15, 25, 35) des dispositifs de détection (14, 24, 34) sont normées.

20. Procédé selon l'une quelconque des revendications 16 à 19,
***caractérisé en ce que,*** pour l'analyse, on utilise un couple de valeurs constitué du signal d'amortissement ayant le deuxième plus grand amortissement et de celui ayant le plus grand amortissement.

21. Procédé selon l'une quelconque des revendications 16 à 20,
***caractérisé en ce que,*** pour déterminer la position de l'objet cible (50) entre des points des données d'apprentissage, on procède à une interpolation.

22. Procédé selon l'une quelconque des revendications 16 à 21,
***caractérisé en ce que*** les parties des courbes d'amortissement destinées à l'analyse sont approximées dans chaque cas par des droites.

23. Procédé selon l'une quelconque des revendications 16 à 22,
***caractérisé en ce que,*** pour l'analyse, on ne tient compte dans chaque cas que d'une section d'un dispositif de détection (14, 24, 34), ou
***en ce que*** plusieurs dispositifs de détection (14, 24, 34) sont exploités simultanément, en particulier des rapports sont formés à partir des signaux analogiques.
